(19) Europäisches Patentamt
European Patent Office
Office européen des brevets

(11) EP 1 597 304 B1

(12) FASCICULE DE BREVET EUROPEEN

(45) Date de publication et mention de la délivrance du brevet:
**13.12.2006 Bulletin 2006/50**

(21) Numéro de dépôt: **04714826.7**

(22) Date de dépôt: **26.02.2004**

(51) Int Cl.:
***C08G 83/00*** *(2006.01)*

(86) Numéro de dépôt international:
**PCT/FR2004/050083**

(87) Numéro de publication internationale:
**WO 2004/076509 (10.09.2004 Gazette 2004/37)**

# (54) DENDRIMERES PHOSPHORES, LEUR PROCEDE DE PREPARATION ET LEUR UTILISATION POUR L EXTRACTION DES ACTINIDES ET DES LANTHANIDES

PHOSPHOR ENTHALTENDE DENDRIMERE, VERFAHREN ZU DEREN HERSTELLUNG UND DEREN VERWENDUNG ZUR EXTRAKTION VON AKTINIDEN UND LANTHANIDEN

PHOSPHOROUS DENDRIMERS, PREPARATION METHOD THEREOF AND USE OF SAME FOR THE EXTRACTION OF ACTINIDES AND LANTHANIDES

(84) Etats contractants désignés:
**AT BE BG CH CY CZ DE DK EE ES FI FR GB GR HU IE IT LI LU MC NL PT RO SE SI SK TR**

(30) Priorité: **26.02.2003 FR 0302343**

(43) Date de publication de la demande:
**23.11.2005 Bulletin 2005/47**

(73) Titulaire: **COMMISSARIAT A L'ENERGIE ATOMIQUE**
**75015 Paris (FR)**

(72) Inventeurs:
- **DOZOL, Jean-François**
  **F-04860 Pierrevert (FR)**
- **SCHMIDT, Christian**
  **15831 Mahlow (DE)**
- **WANG, Pingshan**
  **Cuyahoga Falls, OH 44221 (US)**
- **BÖHMER, Volker**
  **55126 Mainz (DE)**

(74) Mandataire: **Poulin, Gérard et al**
**Brevatome**
**3, rue du Docteur Lancereaux**
**75008 Paris (FR)**

(56) Documents cités:
**WO-A-00/53009**
**WO-A-02/078110**
**FR-A- 2 734 268**
**FR-A- 2 801 592**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 1 597 304 B1

Printed by Jouve, 75001 PARIS (FR)

## Description

### DOMAINE TECHNIQUE

La présente invention a pour objet de nouveaux dendrimères, leur procédé de préparation et leur utilisation pour l'extraction de métaux, tels que les actinides et les lanthanides.

Plus particulièrement, l'invention a trait à des dendrimères comportant des groupes fonctionnels phosphorés, qui présentent des propriétés intéressantes pour l'extraction des métaux, tels que les lanthanides et surtout les actinides.

Ces nouveaux dendrimères peuvent donc être utilisables pour l'extraction de métaux, tels que les actinides, présents dans des solutions aqueuses telles que les effluents aqueux provenant d'installations de retraitement de combustibles nucléaires usés ou les solutions de dissolution de combustibles nucléaires usés.

### ETAT DE LA TECHNIQUE ANTERIEURE

Les dendrimères sont des macromolécules, constituées de monomères qui s'associent selon un processus arborescent autour d'un coeur central.

Ainsi, la figure 1 représente la structure générale d'un dendrimère particulier comportant les parties suivantes :

- un coeur (ou couche centrale), identifié par la référence 1 sur la figure 1, formé soit d'un simple atome, soit d'un ensemble d'atomes déterminé formant un groupement (par exemple $NH_2$), un hétérocycle ou même un macrocycle;
- une ou plusieurs générations s'étendant à partir du coeur vers la périphérie, identifié sur la figure par les références 2, 3, 4 désignant respectivement la $1^{ère}$ génération, la $2^{ème}$ génération, la $3^{ème}$ génération; chaque génération étant constituée d'un ensemble d'unités ou motifs liés de manière covalente au coeur pour la première génération, et sur la génération précédente pour les autres générations ; et
- une couche externe identifiée par la référence 5 comportant des motifs périphériques liés de manière covalente aux motifs de la dernière génération, lesdits motifs périphériques conférant le plus souvent la fonctionnalité à la molécule dendrimère.

Deux types de méthodes de synthèse peuvent être employés pour obtenir de telles molécules:

- la synthèse divergente s'effectuant du coeur vers la périphérie, en greffant un nombre de plus en plus grand de molécules sur la surface multifonctionnalisée du dendrimère ; et
- la synthèse convergente consistant à construire le dendrimère de la périphérie vers le coeur à l'aide de fragments dendritiques appelés dendrons qui sont rattachés lors d'une étape finale au coeur plurifonctionnel.

Ainsi, grâce à leur structure (polymères polyfonctionnels ordonnés) et à leurs propriétés particulières liées à la présence d'un nombre important de fonctionnalités à leurs extrémités, les dendrimères trouvent de nombreuses applications, notamment dans le domaine de la catalyse en tant que support de catalyseur, dans le domaine pharmaceutique, en tant qu'agents de libération de principes actifs.

### EXPOSÉ DE L'INVENTION

La présente invention a pour objet de nouveaux dendrimères phosphorés présentant des performances tout à fait intéressantes dans le domaine de l'extraction de métaux, tels que les lanthanides et surtout les actinides.

Ces dendrimères phosphorés comportent, selon l'invention, un coeur, au moins une génération, et une couche externe constituée, en tout ou partie, de motifs, identiques ou différents, lesdits motifs répondant à la formule (I) suivante :

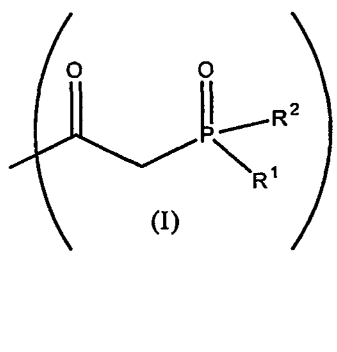

(I)

dans laquelle les $R^1$ et $R^2$, qui peuvent être identiques ou différents, sont des groupes alkyle, alcoxy ou aryle.

Ainsi, l'association de la structure arborescente de type dendrimère avec des motifs de formule (I) en périphérie rend les molécules résultantes particulièrement efficaces pour l'extraction de métaux, en particulier de métaux actinides.

Dans la formule (I) ci-dessus, les $R^1$ et $R^2$ peuvent être des groupes alkyles. Ces groupes alkyles peuvent être selon l'invention des groupes alkyles, linéaires ou ramifiés, ayant de préférence de 1 à 20 atomes de carbone, tel que le groupe méthyle, éthyle, n-propyle, i-propyle, n-butyle, i-butyle.

Les $R^1$ et $R^2$ peuvent être également des groupes alcoxy. Ces groupes peuvent être linéaires ou ramifiés, ayant, par exemple, de 1 à 20 atomes de carbone, tel que le groupe méthoxy, éthoxy.

Les $R^1$ et $R^2$ peuvent être également être des groupes aryles. Les groupes aryles utilisables pour $R^1$ et $R^2$ sont des groupes monovalents dérivés d'un noyau aromatique, tel qu'un noyau benzénique, ou hétérocyclique par enlèvement d'un atome d'hydrogène à l'un des atomes de carbone du cycle. A titre d'exemples de tels groupes, on peut citer les groupes phényle, naphtyle, pyridile, thiophényle.

De préférence, les groupes $R^1$ et $R^2$ représentent chacun un groupe phényle ou un groupe alcoxy ayant, de préférence, de 1 à 18 atomes de carbone.

Des dendrimères particuliers, conformes à la présente invention, comportent un coeur constitué d'un motif, répondant à l'une des formules (II) ou (III) suivantes :

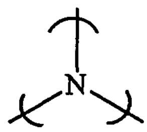

(II)

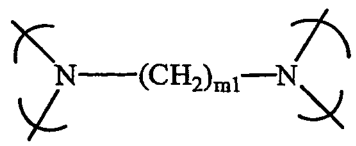

(III)

dans laquelle $m_1$ est un entier allant de 2 à 4, et comportant n générations constituées de motifs, identiques ou différents, n étant un entier allant de 1 à 10, lesdits motifs répondant à la formule (IV) suivante :

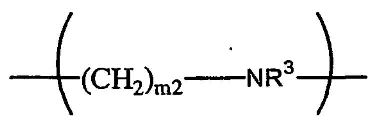

(IV)

dans laquelle :

- $m_2$ est un entier allant de 1 à 4 ;
- lorsque n est supérieur à 1, $R^3$ représente une liaison simple pour les (n-1) premières générations et représente un atome d'hydrogène pour la $n^{ième}$ génération, c'est-à-dire la dernière génération ;
- lorsque n est égal à 1, $R^3$ représente un atome d'hydrogène.

D'autres dendrimères particuliers peuvent comporter un coeur de formule $-NH_2$ et n générations constituées de motifs de formule (IV), n et les motifs répondant à la même définition que celle donnée dans le paragraphe précédent. Un exemple d'un tel dendrimère est fourni dans l'exemple 6 exposé dans la partie expérimentale de la description ci-dessous.

De manière plus explicite, les motifs constituant les (n-1) premières générations (lorsque n est supérieur à 1), répondent à la formule (4a) suivante :

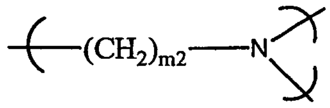

(4a)

De manière plus explicite, les motifs de la $n^{ième}$ génération (dite « dernière génération » lorsque n est supérieur à 1 ou dite « unique génération » lorsque n est égal à 1) répondent à la formule (4b) suivante :

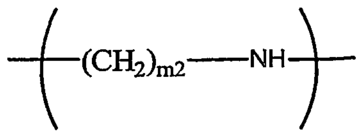

(4b)

Un dendrimère particulier répondant à la définition ci-dessus est représenté sur la figure 2 jointe en annexe.

La figure 2 représente un dendrimère comprenant un coeur de formule conforme à la formule (III) avec $m_1$ égal à 4, 4 générations conformes à la formule (IV) (soit n égal à 4) avec $m_2$ égal à 3 et une couche externe constituée de motifs conformes à la formule (I) avec $R^1$ et $R^2$ représentant un groupe phényle (symbolisé par Ph sur la figure 2). Plus précisément, sur le coeur de formule :

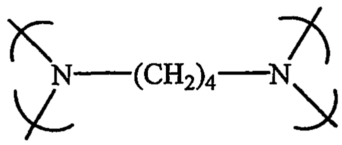

est lié de manière covalente quatre motifs de formule suivante :

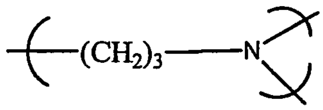

ces quatre motifs constituant la première génération du dendrimère. Sur chacun des atomes d'azote des motifs constitutifs de la première génération sont liés de manière covalente deux motifs de formule telle qu'explicitée ci-dessus, l'ensemble des motifs ainsi liés (au nombre de 6) constituant la deuxième génération. De même, Sur chacun des atomes d'azote des motifs constitutifs de la deuxième génération sont liés de manière covalente deux motifs de formule telle qu'explicitée ci-dessus, l'ensemble des motifs ainsi liés (au nombre de 12) constituant la troisième génération. Enfin la dernière génération est constituée de motifs de formule suivante :

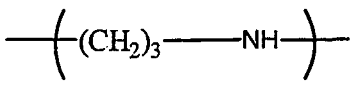

lesdits motifs étant liés de manière covalente sur les atomes d'azote de la troisième génération, les atomes d'azote de la dernière génération étant liés de manière covalente aux motifs de formule :

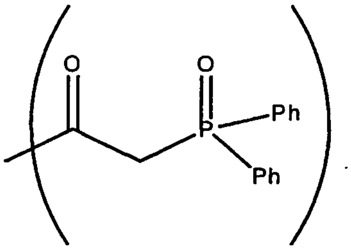

D'autres dendrimères particuliers, selon la présente invention, comportent un coeur, constitué d'un motif répondant à la formule (II) suivante :

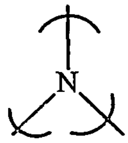

(II)

et comportant n générations constituées de motifs, identiques ou différents, n étant un entier allant de 1 à 10, lesdits motifs répondant à la formule (V) suivante :

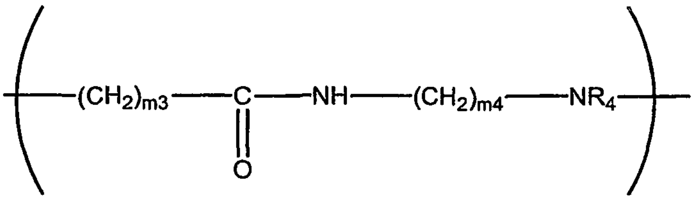

(V)

dans laquelle :

- $m_3$ est un entier allant de 2 à 5 ;
- $m_4$ est un entier allant de 2 à 5 ;
- lorsque n est supérieur à 1, $R_4$ est une liaison simple pour les (n-1) premières générations, et un atome d'hydrogène pour la $n^{ième}$ génération (dite dernière génération) ;
- lorsque n est égal à 1, $R_4$ représente un atome d'hydrogène.

Par exemple, $m_3$ et $m_4$ peuvent être égaux à 3.

De manière plus explicite, les motifs constituant les (n-1) premières générations (c'est -à-dire lorsque n est supérieur à 1), répondent à la formule (5a) suivante :

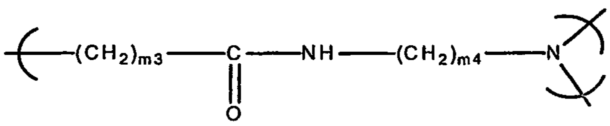

(5a)

De manière plus explicite, les motifs constituant la $n^{ième}$ génération (dite « dernière génération » lorsque n est

supérieur à 1 ou dite « unique génération » lorsque n est égal à 1) répondent à la formule (5b) suivante :

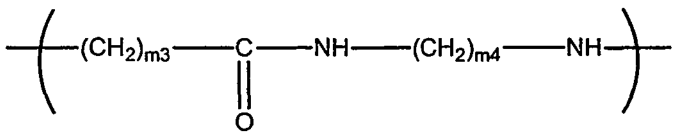

(5b)

Un dendrimère conforme à la présente définition est représenté sur la figure 3.

Sur cette figure, le dendrimère représenté comporte un coeur de formule (II), 3 générations (soit n égal à 3) comportant des motifs conformes à la formule (V) avec $m_3$ et $m_4$ égaux à 2, et une couche externe constituée de motifs conformes à la formule (I) avec $R^1$ et $R^2$ représentant des groupes phényle (symbolisé par Ph sur la figure 3).

Des dendrimères particuliers conformes à la définition de l'invention, peuvent être greffés (c'est-à-dire liés par une liaison covalente) sur une particule minérale fonctionnalisée, c'est-à-dire d'une particule comportant à sa surface des groupes aptes à former pont entre la particule minérale et des fonctions réactives des dendrimères de l'invention (telles que des fonctions amines).

Avantageusement, de telles particules peuvent être des particules de silice comportant, à sa surface, avant greffage, des groupes $-CO_2H$, triazinyl, en particulier dichlorotriazinyl, ou époxide. De telles particules sont commercialisées par la société Micromod. Avec de telles particules, il se forme, après greffage, des motifs formant pont entre la particule et le dendrimère, lesdits motifs formant pont répondant aux formules respectives -CO-, -triazine-, -monoclorotriazine-, $-CHOH-CH_2-$.

Un exemple de dendrimère greffé est fourni dans l'exemple 6, lequel dendrimère est représenté par la formule :

$$\text{Particule-CO-NH-}(CH_2)_3\text{-N}[(CH_2)_2\text{-NH}]_2\text{-CO-}CH_2P(O)Ph_2.$$

Les dendrimères de la présente invention peuvent être préparés par un procédé comprenant une étape consistant à faire réagir un dendrimère de base avec un composé de formule (VI) suivante:

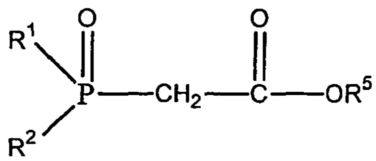

(VI)

dans laquelle $R^1$ et $R^2$ sont tels que définis ci-dessus, $R^5$ représente H, un groupe p-nitrophényle ou un groupe 2,4-dinitrophényle, ledit dendrimère de base comportant une couche externe constituée de motifs comportant une fonction terminale apte à réagir avec ledit composé de formule (VI),

afin de former un dendrimère comportant une couche externe comprenant des motifs de formule (I) tels que définis précédemment.

Le composé de formule (VI) utilisé dans le cadre de ce procédé peut être préparé à partir d'un phosphinite d'alkyle correspondant à la formule (VII) suivante :

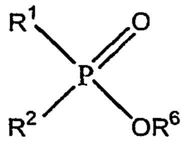

(VII)

dans laquelle $R^1$ et $R^2$ ont les significations données ci-dessus et $R^6$ est un groupe alkyle possédant, par exemple, de 1 à 4 atomes de carbone, par réaction de celui-ci avec du bromoacétate d'éthyle, suivie d'une hydrolyse (pour former le composé avec $R_5$ représentant H) et d'une éventuelle estérification de l'acide obtenue avec du p-nitrophénol ou du 2,4-dinitrophénol.

De préférence, la réaction entre le dendrimère de base et le composé de formule (VI) s'effectue en présence d'un catalyseur tel que la triéthylamine, et éventuellement d'un activateur de couplage tel que le dicyclohexylcarbodiimide.

Avantageusement, la réaction entre le dendrimère de base et le composé de formule (VI) s'effectue sur un support se présentant, de préférence, sous forme de particules de silice fonctionnalisées telles que définies ci-dessus, le dendrimère de base se greffant à la surface de la particule. L'intérêt d'utiliser un tel support dans le cadre du procédé réside dans le fait qu'il est plus facile à la fin du procédé de séparer le dendrimère obtenu du milieu réactionnel lorsque le dendrimère est greffé sur les particules, la séparation pouvant se faire par simple filtration.

Les fonctions, aptes à réagir avec le composé de formule (VI), constituant les fonctions terminales du dendrimère de base, sont, avantageusement des fonctions nucléophiles aptes à s'additionner sur le groupement CO du composé phosphoré (VI), cette addition étant suivie d'une élimination du groupe $-OR_5$.

Une telle fonction est, dans le cadre de cette invention, de préférence $NH_2$.

De tels dendrimères de base comportant de telles fonctions peuvent être tout type de dendrimère et notamment des dendrimères commerciaux.

A titre d'exemple, on peut citer, comme dendrimère de base, le s dendrimères commercialisés par la société Aldrich, tel que le polypropylène imine octaamine, hexacontamine, dotriacontamine ou tétrahexacontamine. Par exemple, le dendrimère dodriacontamine, comporte comme couche externe une couronne de 32 fonctions amine primaire, lesdites fonctions amine étant aptes à réagir avec le composé phosphoré de formule (VI) ci-dessus, pour donner, après réaction, une couche externe constituée d'une couronne de motifs de formule (I).

La réaction du composé dotriacontamine mentionné ci-dessus sur le composé (VI) (avec $R_1$ et $R_2$ représentant des groupes phényle) donne le dendrimère représenté sur la figure 2.

On peut également citer, comme dendrimère de base, les dendrimères synthétisés par la société Dendritech, tels que les dendrimères de type polyamidoamine (dit PAMAM). Un exemple de dendrimère de 3$^{ème}$ génération de ce type, après réaction avec le composé de formule (VI), est représenté sur la figure 3. Ces dendrimères peuvent être également réalisés par voie de synthèse, dont le schéma réactionnel est représenté en figure 4.

Selon ce schéma de synthèse particulier, on synthétise la première génération du dendrimère de base de la façon suivante :

- réaction d'addition de Michael 1,4 de l'ammoniaque sur l'acrylate de méthyle dans le méthanol pour obtenir le composé (a) ;
- réaction sur le composé (a) obtenu précédemment d'éthylène diamine dans le méthanol pour obtenir le composé (b);

Le composé (b) dit de première génération comportant des fonctions amine primaire en périphérie, peut subir à nouveau les deux réactions susmentionnées, pour donner un composé de deuxième génération (d), tel que cela est représenté sur la figure 4.

Concernant les dendrimères de base précurseurs des dendrimères de l'invention comportant un coeur de formule (I) et des générations constituées de motifs de formule (IV), ils peuvent être disponibles commercialement ou préparés selon le schéma de synthèse représenté en figure 5 (pour lequel $m_2$ est égal à 2).

Ce schéma de synthèse comprend successivement la réaction de la benzylamine (représentée par $Bz-NH_2$ sur la figure 5) avec l'acrylonitrile, suivi d'une réduction des fonctions nitrile en fonction $-CH_2-NH_2$ par action de borohydrure de sodium en présence d'un catalyseur à base de cobalt (III), pour obtenir le composé (f). Ces réactions sont reproduites autant de fois que l'on veut obtenir de générations.

On note que le coeur du type Bz-N subit une débenzylation, non représenté sur la figure, le groupe NH ainsi libéré pouvant à nouveau réagir avec l'acrylonitrile suivi d'une réduction, afin de former un dendrimère ayant un coeur

de formule (I) et des générations constituées de motif de formule (IV), la dernière génération ayant comme fonctions terminales des fonctions $-NH_2$.

Les dendrimères, conformes à la présente invention, peuvent être utilisés pour extraire au moins un métal choisi parmi les actinides et éventuellement les lanthanides présent dans une solution aqueuse, notamment une solution acide telle que les solutions de dissolution de combustibles irradiés et les effluents aqueux provenant d'installations de retraitement de combustibles nucléaires usés. En particulier, ces métaux peuvent être l'américium et le curium.

La solution aqueuse contenant au moins un de ces métaux peut être une solution nitrique contenant de 1 à 5 mol/l de $HNO_3$.

Pour mettre en oeuvre le procédé d'extraction selon l'invention, on met en contact la solution aqueuse contenant le ou les métaux à séparer avec au moins un dendrimère de l'invention, de préférence par dissolution de celui-ci dans la solution aqueuse, suivie d'une étape de séparation, afin de séparer le ou les dendrimères ayant piégé le ou les métaux de ladite solution aqueuse. De préférence, cette étape de séparation s'effectue par filtration sur filtre de la solution aqueuse, les dendrimères ayant fixé le ou les métaux restant sur le filtre et la solution traversant les pores du filtre par simple action de la force de gravité. L'étape de séparation peut se faire également par ultrafiltration, qui consiste, en plus de l'action de la simple force de gravité, à exercer un gradient de pression pour accélérer le processus de filtration.

On note que ces étapes (mise en contact, séparation) peuvent être réitérées plusieurs fois afin d'améliorer l'extraction du ou des métaux de la phase aqueuse.

La première étape du procédé (c'est-à-dire la mise en contact du dendrimère avec la solution aqueuse à traiter) consiste à solubiliser au moins un dendrimère de l'invention dans la solution aqueuse en ajoutant directement ledit dendrimère dans la solution. La solubilisation peut être facilitée, par exemple, par ultrasonication.

Ensuite, la séparation entre le ou les dendrimères ayant fixé le ou les métaux à séparer s'effectue, de préférence, par ultrafiltration ou simple filtration de la solution aqueuse sur un filtre (ou membrane) adéquat, la taille des dendrimères étant telle qu'ils restent piégés dans les pores du filtre utilisé pour la séparation.

L'ultrafiltration consiste sous l'action, par exemple, d'un gradient de pression, à séparer grâce à l'utilisation de filtres poreux (ayant par exemple des diamètres de pores de 0,22 à 5 $\mu$m) la phase aqueuse des dendrimères ayant fixé au moins une partie du ou des métaux présents initialement dans la phase aqueuse.

Selon la taille du dendrimère à séparer, on peut utiliser des filtres comportant des tailles de pore supérieures à 5 $\mu$m, des filtres comportant des tailles de pore de 0,01 à 5 $\mu$m, ou des filtres comportant des tailles de pore de 0,001 à 0,01 $\mu$m.

Ces filtres de porosité très faible peuvent être des membranes en polypropylène, en fluorure de polyvinylidène ou encore en polyfluoroéthylène mais également des membranes minérales.

Ce procédé d'extraction est particulièrement avantageux pour sa mise en oeuvre très simple, du fait qu'il ne nécessite pas la mise en oeuvre de techniques d'extraction liquide-liquide telles que des colonnes pulsées ou des batteries d'extracteurs centrifuges, qui doivent être nucléarisées comme cela est le cas pour les procédés d'extraction classiques.

D'autres caractéristiques et avantages de l'invention apparaîtront mieux à la lecture des exemples suivants, donnés bien entendu à titre illustratif et non limitatif.

## BREVE DESCRIPTION DES DESSINS.

La figure 1, déjà décrite, est un schéma représentant la structure générale d'un dendrimère.

Les figures 2 et 3, déjà décrites, représentent les formules de dendrimères conformes à l'invention.

Les figures 4 et 5, déjà décrites, représentent des schémas de synthèse permettant d'obtenir des dendrimères servant de dendrimères de base pour la synthèse de dendrimères conformes à l'invention.

## EXPOSÉ DÉTAILLÉ DE MODES DE RÉALISATION PARTICULIERS

Les exemples 1 à 3 illustrent la préparation de dendrimères conformes à la présente invention.

Les exemples 4 à 6 illustrent l'utilisation de dendrimères conformes à la présente invention pour extraire des métaux actinides et lanthanides.

<u>Exemple 1.</u>

L'exemple 1 illustre la préparation de dendrimère ayant une couche externe constituée de motifs de formule (I) avec $R^1$ et $R^2$ représentant des groupes phényle, un coeur de formule :

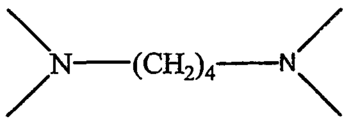

et de 2 à 5 générations constituées de motifs de formule :

$$—(CH_2)_3—NR^3—$$

Le dendrimère de 4ème génération est représenté sur la figure 2.

Pour l'ensemble des préparations exposées ci-dessous, on part de dendrimères de base comportant comme fonctions terminales des fonctions $-NH_2$, ces dendrimères étant commercialisés par la société ALDRICH sous les noms de produits suivants :

- le polypropylène imine octaamine ;
- le polypropylène imine hexacontamine ;
- le polypropylène imine dotriacontamine ;
- le polypropylène imine tétrahexacontamine

a) Préparation d'un dendrimère comportant deux générations (dendrimère dit de 2ème génération) et une couche externe constituée d'une couronne de 8 motifs de formule (I).

A une solution de 600 mg de l'ester actif p-nitrophényl(di-phényl-phosphoryl) acétate dans 10 ml de chloroforme, on ajoute une solution de 110 mg de dendrimère polypropylène imine octaamine (commercialisé par Aldrich sous la référence DAB-Am-8) et 1 ml de triéthylamine dans 20 ml de chloroforme. Le mélange réactionnel est agité pendant plusieurs jours à température ambiante. Le mélange est ensuite extrait trois fois avec de l'ammoniaque concentrée. Les phases organiques sont séchées avec du sulfate de magnésium et évaporées quasiment à sec. On ajoute au résidu obtenu de l'hexane, suite à quoi un précipité se forme. Le précipité est filtré puis séché. On obtient 300 mg de solide, correspondant au produit final, soit 81 % de rendement.

Les caractéristiques de ce produit sont les suivantes :

$^1$H-RMN (200 MHz, $CDCl_3$), $\delta$ : 7,98 (br t, 8H, NH), 7,8-7,65 (m, 32H, H phényl), 7,5-7,3 (m, 48H, H phényl), 3,40 (d, J=13,7 Hz, 16H, $CH_2$), 3,10 (m, 16H, $CH_2$), 2,40-2,00 (m, 36H, $CH_2$), 1,50-1,20 (m, 28H, $CH_2$).

b) Préparation de dendrimères comportant trois générations (dendrimère dit de 3ème génération), quatre générations (dendrimère dit de 4ème génération) et cinq générations (dendrimère dit de 5ème génération).

Le mode opératoire suivant a été appliqué pour la préparation des différents dendrimères mentionnés ci-dessus.

A une solution de 110 mg de dendrimère adéquat dissous dans 20 mL de chloroforme et 1 mL de triéthylamine, on ajoute une solution de 550 mg de l'ester actif p-nitrophényl(di-phényl-phosphoryl) acétate dans 10 ml de chloroforme. Le mélange réactionnel est agité pendant plusieurs jours (jusqu'à une semaine) à température ambiante. Pendant cette opération, le mélange réactionnel devient jaune. Ensuite, ce mélange réactionnel est extrait trois fois avec une solution d'ammoniaque concentrée. Les phases ammoniaquées sont séchées avec du sulfate de magnésium et évaporées. Le résidu huileux est dissous dans environ 10 ml de chloroforme suivi de 40 ml de toluène. Le mélange obtenu est à nouveau évaporé. Afin d'éliminer complètement la triéthylamine, l'opération (ajout de chloroforme+toluène et évaporation) est renouvelée 4 fois. Enfin, à l'issue de ces opérations, le résidu est dissous dans du chloroforme suivi d'un ajout d'hexane. Le précipité obtenu est filtré puis séché.

Pour synthétiser le dendrimère de 3ème génération, le dendrimère de base pour la synthèse est le polypropylène imine hexacontamine (commercialisé par Aldrich sous la référence DAB-Am-16).

Pour synthétiser le dendrimère de 4ème génération, le dendrimère de base pour la synthèse est le polypropylène imine dodriacontamine (commercialisé par Aldrich sous la référence DAB-Am-32).

Pour synthétiser le dendrimère de 5ème génération, le dendrimère de base pour la synthèse est le polypropylène imine tétrahexacontamine (commercialisé par Aldrich sous la référence DAB-Am-64).

Les caractéristiques des composés sont les suivantes :

- pour le dendrimère de troisième génération :

Rendement : 58 % (190 mg)

$^1$H-RMN (200 MHz, $CDCl_3$), $\delta$ : 8,01 (br s, 16H, NH), 7,8-7,65 (m, 64H, H phényl), 7,5-7,3 (m, 96H, H phényl), 3,40 (d, J=13,6 Hz, 32H, $CH_2$), 3,09 (m, 32H, $CH_2$), 2,80-2,00 (m, 36H, $CH_2$), 1,50-1,20 (br s, 28H, $CH_2$).

- pour le dendrimère de quatrième génération :

Rendement : 73 % (240 mg)
$^1$H-RMN (200 MHz, $CDCl_3$), $\delta$ : 8,15 (br s, 32H, NH), 7,8-7,65 (m, 128H, H phényl), 7,5-7,3 (m, 192H, H phényl), 3,43 (d, J=13,6 Hz, 64H, $CH_2$), 3,07 (m, 64H, $CH_2$), 2,50-2,00 (m, 180H, $CH_2$), 1,50-1,20 (br s, 124H, $CH_2$).

- pour le dendrimère de cinquième génération :

Rendement : 60 % (190 mg)

$^1$H-RMN (200 MHz, $CDCl_3$), $\delta$ : 8,21 (br s, 64H, NH), 7,8-7,65 (m, 256H, H phényl), 7,5-7,3 (m, 384H, H phényl), 3,43 (d, J=13,6 Hz, 128H, $CH_2$), 3,06 (m, 128H, $CH_2$), 2,50-2,00 (m, 372H, $CH_2$), 1,50-1,20 (br s, 256H, $CH_2$).

EXEMPLE 2.

L'exemple 2 illustre la préparation de dendrimères ayant une couche externe constituée de motifs de formule (I) avec $R_1$ et $R_2$ représentant des groupes phényles, un coeur de formule :

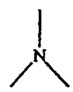

et de 4 à 5 générations constituées de motifs :

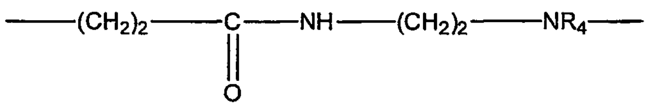

Le dendrimère de type PAMAM de 3ème génération est représenté sur la figure 4.

a)Préparation d'un dendrimère PAMAM de 4$^{ème}$ génération.
A une solution de 350 mg de dendrimère de base (de 4$^{ème}$ génération) comportant une couche externe comprenant 32 fonctions $NH_2$, et 120 mg de triéthylamine dans 35 mL de chloroforme, on ajoute goutte à goutte une solution de 700 mg d'ester actif p-nitrophényl(di-phényl-phosphoryl)acétate dans 35 ml de chloroforme. La solution jaune clair obtenue est mise sous agitation pendant 2,5 jours à température ambiante. Ensuite, on extrait ladite solution quatre fois avec une solution d'hydroxyde de sodium à 10 %. Les phases organiques sont séchées avec du sulfate de magnésium et évaporées. Le résidu huileux obtenu est précipité à partir de chloroforme dans de l'hexane. On obtient une poudre blanche, qui est recueillie par filtration puis séchée.
Les caractéristiques des composés sont les suivantes :

- Rendement : 6,7 % (55 mg)

b) Préparation d'un dendrimère PAMAM de 5$^{ème}$ génération.

A une solution de 215 mg de dendrimère de base (de 5$^{ème}$ génération), comportant comme couche externe 64 fonctions amino -$NH_2$) et 210 mg de triéthylamine dans 35 mL de chloroforme, on ajoute goutte à goutte une solution de 600 mg d'ester actif p-nitrophényl(di-phényl-phosphoryl)acétate dans 15 ml de chloroforme. La solution jaune clair obtenue est mise sous agitation pendant 2,5 jours à température ambiante. Ensuite, on extrait ladite solution quatre fois avec une solution d'hydroxyde de sodium à 10 %. Les phases organiques sont séchées avec du sulfate de magnésium et évaporées. Le résidu huileux obtenu est précipité à partir de chloroforme dans de l'hexane. On obtient une poudre blanche, qui est recueillie par filtration puis séchée.
Les caractéristiques des composés sont les suivantes :

- Rendement : 16 % (72 mg)

EXEMPLE 3.

Dans cet exemple, on évalue l'efficacité d'un dendrimère de l'exemple 1, correspondant au dendrimère de 4ème génération pour séparer l'europium d'une solution aqueuse contenant cet élément.
Dans ce but, on effectue deux essais à des concentrations différentes en dendrimère ($10^{-5}$ mol/l et 2, $5.10^{-5}$ mol/l).
Pour chacun des essais, on dissout dans un bécher contenant la phase aqueuse contenant de l'europium, le dendrimère (la dissolution pouvant être accélérée en soumettant la solution à un traitement à ultra-sons).
La solution est ensuite filtrée, le dendrimère ayant fixé une partie de l'europium restant abdsorbé sur le filtre. Le filtrat obtenu est à nouveau mis en contact avec une masse prédéterminée de dendrimère suivie d'une filtration.
Ces opérations sont réitérées trois fois.
A l'issue de chaque filtration, on détermine les concentrations en europium du filtrat par spectrométrie $\gamma$ ou scintillation liquide.
On détermine ensuite le coefficient de distribution de l'europium de la manière suivante, ce coefficient étant calculé sur la base de la différence d'activité de la solution avant et après :

$$Kd = \frac{(C_{in} - C_{fin})}{C_{in}} x \frac{V}{M_{ext}}$$

$C_{in}$ : concentration en europium de la solution (ou filtrat) avant dissolution du dendrimère ;
$C_{fin}$ : concentration en europium après dissolution du dendrimère et filtration ;
V : volume de la solution ;
$M_{ext}$ : Masse de dendrimère dissous.

Les résultats sont regroupés dans le tableau suivant :

| Concentration en dendrimère | $10^{-5}$ mol/l | $2,5.10^{-5}$ mol/l |
|---|---|---|
| 1er filtrat Kd | 1570 | 1160 |
| 2nd filtrat Kd | 1700 | 1720 |
| 3ème filtrat Kd | 2170 | 1790 |

On constate que le Kd augmente avec le nombre d'opérations dissolution-filtration, ce qui met en évidence la capacité des dendrimères de l'invention à séparer l'europium d'une phase aqueuse, même dans le cas où l'europium est présent à l'état de traces dans la solution nitrique.

EXEMPLE 4.

Dans cet exemple, on évalue l'efficacité de dendrimères préparés selon l'exemple 1 pour séparer l'europium, l'américium à partir de solutions contenant ces deux éléments, l'acidité nitrique des solutions étant de 3 mol/L.
De la même manière que dans l'exemple précédent, on met en contact des dendrimères ( respectivement de 2ème, 3ème, 4ème et 5ème génération) à différentes concentrations, avec une solution contenant les différents éléments précités suivie d'une filtration ; lesdites opérations étant réitérées au moins deux fois.
On détermine, de la même manière que dans l'exemple précédent, les coefficients de distribution de l'europium et de l'américium ainsi que le coefficient de sélectivité de l'américium sur l'europium.
Les résultats des essais sont regroupés dans le tableau ci-dessous.

| Dendrimère | Phase aqueuse : $HNO_3$3M + dendrimère | | | | |
|---|---|---|---|---|---|
| | Conc (M) | | 1ère filtration | 2ème filtration | 3ème filtration |
| 2ème génération | $10^{-4}$ | $K_{d\ Eu}$ | 1170 | 1200 | 970 |
| 3éme génération | | $K_{d\ Eu}$ | 1090 | 1380 | 1050 |

(suite)

| Dendrimère | Phase aqueuse : $HNO_3$3M + dendrimère | | | | |
|---|---|---|---|---|---|
| | Conc (M) | | 1ère filtration | 2ème filtration | 3ème filtration |
| | $10^{-5}$ | $K_{d\ Am}$ | 2820 | 4240 | 2830 |
| | | $S_{Am/Eu}$ | 2,59 | 3,07 | 2,7 |
| 4éme génération | $10^{-5}$ | $K_{d\ Eu}$ | 1510 | 920 | 2600 |
| | | $K_{d\ Am}$ | 3370 | 2120 | 4860 |
| | | $S_{Am/Eu}$ | 2,23 | 2,31 | 1,87 |
| 5éme génération | $5.10^{-6}$ | $K_{d\ Eu}$ | 1070 | 2280 | 1790 |
| | | $K_{d\ Am}$ | 1070 | 2280 | 1790 |
| | | $S_{Am/Eu}$ | 3,08 | 2,09 | 2,83 |

Comme dans l'essai précédent on remarque l'efficacité des dendrimères en concentration très faible pour éliminer l'américium et dans une moindre mesure l'europium eux même présents à l'état de traces. On observe également une certaine sélectivité Am/Eu qui reste indépendante de la concentration des cations en solution.

EXEMPLE 5.

Dans cet exemple, on évalue l'efficacité de dendrimères préparés selon l'exemple 2 pour l'extraction d'Eu et d'Am de solutions HNO3 3M. Le protocole d'extraction est identique à celui décrit dans les exemples 3 et 4.

Les résultats sont regroupés dans le tableau suivant.

| | Concent. dendrimer | | $1^{ère}$ filtration | $2^{ème}$ filtration | $3^{ème}$ filtration | $4^{ème}$ filtration |
|---|---|---|---|---|---|---|
| PAMAM $4^{eme}$ generation | $7.9\ 10^{-6}$ | $K_{d\ Eu}$ | 1250 | 1820 | 1670 | 1400 |
| | | $K_{dAm}$ | 2150 | 3050 | 2840 | 2020 |
| PAMAM $5^{eme}$ generation | $7.9\ 10^{-6}$ | $K_{d\ Eu}$ | 1500 | 1350 | 1660 | 1140 |
| | | $K_{dAm}$ | 1860 | 2960 | 2770 | 1580 |

Les performances de ces dendrimères PAMAM CMPO sont tout à fait comparables à ceux obtenus dans l'exemple 4.

EXEMPLE 6.

Dans cet exemple, on évalue l'efficacité de dendrimères greffés sur des particules de silice pour l'extraction d'Eu et d'Am d'une solution HNO3 3M avec 300 mg de particules portant le dendrimère représenté ci-dessus lié de façon covalente sur la particule.

Le dendrimère utilisé est un dendrimère de formule suivante :

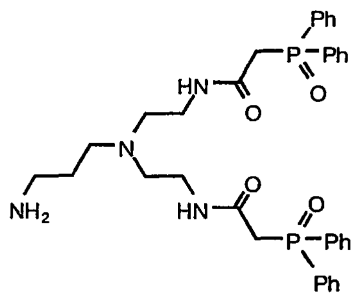

Les particules sur lesquelles est greffé ce dendrimère sont des particules fonctionnalisées par des groupements $-CO_2H$, pour donner, après réaction du groupement $-CO_2H$ sur le $-NH_2$ du dendrimère, un dendrimère greffé correspondant à la formule :

$$\text{Particule-CO-NH-}(CH_2)_3\text{-N}[(CH_2)_2\text{-NH}]_2\text{-CO-}CH_2P(O)Ph_2$$

Le protocole d'extraction est identique à celui décrit dans les exemples 3 et 4.

Les résultats sont les suivants :

$$K_{d\ Eu}: 57 \quad K_{d\ Am}: 132$$

Ces résultats démontrent que les dendrimères de cet exemple sont aptes à extraire à la fois de l'europium et de l'américium, avec une certaine sélectivité pour l'américium.

## Revendications

1. Dendrimère phosphoré comprenant un coeur, au moins une génération et une couche externe constituée, en tout ou partie, de motifs, identiques ou différents, lesdits motifs répondant à la formule (I) suivante :

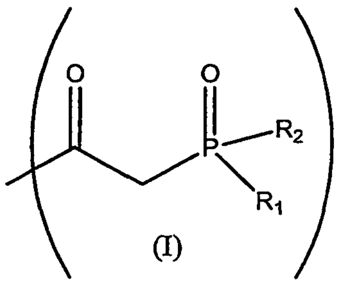

(I)

dans laquelle les $R_1$ et $R_2$ qui peuvent être identiques ou différents, sont des groupes alkyle, alcoxy ou aryle.

2. Dendrimère selon la revendication 1, dans lequel le coeur est constitué d'un motif répondant à l'une des formules (II) ou (III) suivantes :

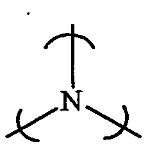

(II)

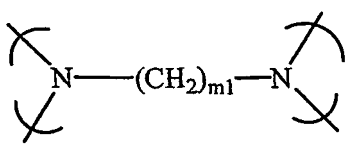

(III)

dans laquelle $m_1$ est un entier allant de 2 à 4, et comportant n générations constituées de motifs, identiques ou différents, n étant un entier allant de 1 à 10, lesdits motifs répondant à la formule (IV) suivante :

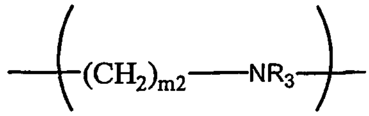

(IV)

dans laquelle :

- $m_2$ est un entier allant de 1 à 4 ;
- lorsque n est supérieur à 1, $R^3$ représente une liaison simple pour les (n-1) premières générations et représente un atome d'hydrogène pour la $n^{ième}$ génération;
- lorsque n est égal à 1, $R^3$ représente un atome d'hydrogène.

**3.** Dendrimère selon la revendication 1, dans lequel le coeur est constitué d'un motif répondant à la formule (II) suivante :

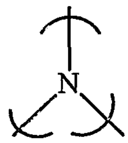

(II)

et comportant n générations constituées de motifs, identiques ou différents, répondant à la formule (V) suivante :

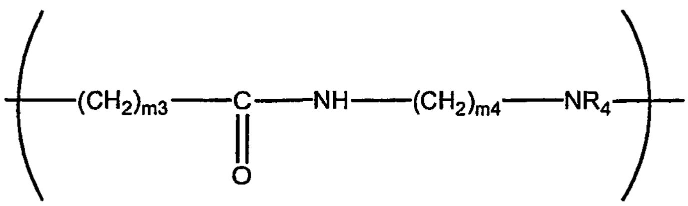

(V)

dans laquelle :

- $m_3$ est un entier allant de 2 à 5 ;
- $m_4$ est un entier allant de 2 à 5 ;
- lorsque n est supérieur à 1, $R_4$ est une liaison simple pour les (n-1) premières générations, et un atome d'hydrogène pour la $n^{ième}$ génération;
- lorsque n est égal à 1, $R_4$ représente un atome d'hydrogène.

**4.** Dendrimère phosphoré selon la revendication 1, ledit dendrimère étant greffé sur une particule minérale fonctionnalisée.

**5.** Dendrimère phosphoré selon la revendication 4, dans lequel la particule minérale fonctionnalisée est une particule de silice comportant à sa surface, avant ledit greffage, un ou plusieurs groupes choisis parmi les groupes $-CO_2H$, -dichlorotriazinyl, époxyde.

**6.** Dendrimère phosphoré selon l'une quelconque des revendications 1 à 5, dans lequel $R_1$ et $R_2$ représentent le groupe phényle.

**7.** Dendrimère phosphoré selon l'une quelconque des revendications 1 à 5, dans lequel $R_1$ et $R_2$ représentent un groupe alcoxy ayant de 1 à 18 atomes de carbone.

**8.** Procédé de préparation d'un dendrimère phosphoré, ledit dendrimère comportant un coeur, au moins une génération et une couche externe constituée, en tout ou partie, de motifs, identiques ou différents, lesdits motifs répondant à la formule (I) suivante :

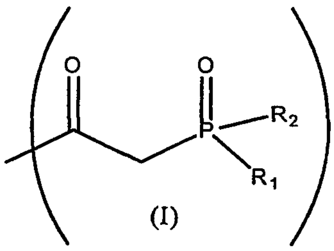

(I)

dans laquelle $R_1$ et $R_2$ qui peuvent être identiques ou différents, sont des groupes alkyle, alcoxy ou aryle,
ledit procédé comprenant une étape consistant à faire réagir un dendrimère de base avec le composé de formule (VI) suivante :

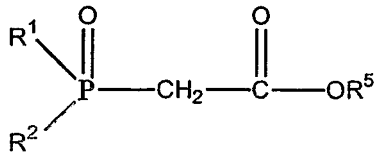

(VI)

dans laquelle $R_1$ et $R_2$ sont tels que définis dans la revendication 1, $R^5$ représente H, un groupe p-nitrophényle ou un groupe 2,4-dinitrophényle,
ledit dendrimère de base comportant une couche externe comprenant des motifs porteurs d'une fonction terminale apte à réagir avec ledit composé de formule (VI).

**9.** Procédé de préparation selon la revendication 8, dans lequel la fonction terminale apte à réagir avec le composé de formule (VI) est une fonction $NH_2$.

**10.** Procédé de préparation selon la revendication 8 ou 9, dans lequel la réaction entre le dendrimère de base et le composé de formule (VI) s'effectue en présence d'un catalyseur et éventuellement d'un activateur de couplage.

**11.** Procédé selon la revendication 10, dans lequel le catalyseur est la triéthylamine.

**12.** Procédé selon la revendication 10 ou 11, dans lequel l'activateur de couplage est le dicyclohexylcarbodiimide.

**13.** Procédé selon l'une quelconque des revendications 8 à 12, dans lequel la réaction entre le dendrimère de base et le composé de formule (VI) s'effectue sur un support se présentant, de préférence, sous forme de particules de silice.

**14.** Procédé pour extraire au moins un métal choisi parmi les actinides et/ou les lanthanides présent dans une solution aqueuse, ledit procédé comprenant successivement une étape de mise en contact de la solution aqueuse avec au moins un dendrimère phosphoré comportant une couche externe constituée, en tout ou partie, de motifs, identiques ou différents, lesdits motifs répondant à la formule (I) suivante :

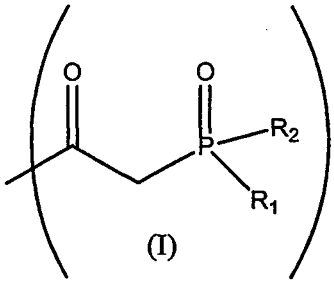

(I)

dans laquelle $R_1$ et $R_2$ qui peuvent être identiques ou différents, sont des groupes alkyle, alcoxy ou aryle, suivie d'une étape de séparation, afin de séparer le ou les dendrimères ayant piégé le (les) métal (métaux) de la solution aqueuse.

**15.** Procédé selon la revendication 14, dans lequel l'étape de mise en contact entre le dendrimère et la solution aqueuse contenant le ou les métaux à extraire s'effectue par dissolution dudit dendrimère dans ladite solution.

**16.** Procédé selon la revendication 14 ou 15, dans lequel l'étape de séparation s'effectue par filtration sur filtre de la solution, le dendrimère ayant fixé le ou les métaux restant sur le filtre.

## Claims

**1.** Phosphorus-containing dendrimer comprising a core, at least one generation and an external layer consisting, completely or partly, of identical or different units, the said units satisfying the following formula (I):

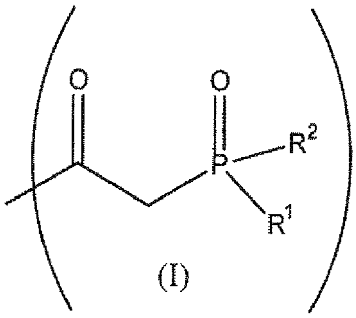

(I)

in which $R^1$ and $R^2$. which may be identical or different, are alkyl, alkoxy or aryl groups.

**2.** Dendrimer according to Claim 1, in which the core consists of a unit satisfying one of the following formulae, (II) or (III):

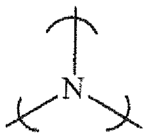

(II)

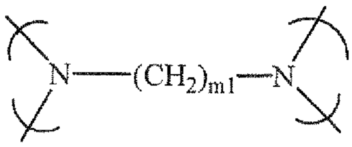

(III)

in which $m_1$ is an integer ranging from 2 to 4, and having n generations consisting of identical or different units, n

being an integer ranging from 1 to 10, the said units satisfying the following formula (IV) :

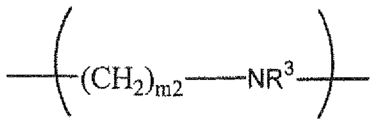

(IV)

in which:

- $m_2$ is an integer ranging from 1 to 4;
- when n is greater than 1, $R^3$ represents a single bond as regards the (n-1) first generations and represents a hydrogen atom as regards the $n^{th}$ generation; and
- when n is equal to 1, $R^3$ represents a hydrogen atom.

**3.** Dendrimer according to Claim 1, in which the core consists of a unit satisfying the following formula (II) :

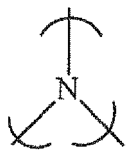

(II)

and having n generations consisting of identical or different units satisfying the following formula (V):

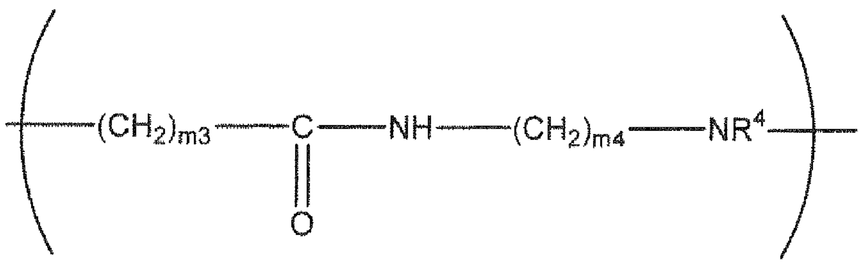

(V)

in which:

- $m_3$ is an integer ranging from 2 to 5;
- $m_4$ is an integer ranging from 2 to 5;
- when n is greater than 1, $R^4$ is a single bond as regards the (n-1) first generations and a hydrogen bond as regards the $n^{th}$ generation; and
- when n is equal to 1, $R^4$ represents a hydrogen atom.

**4.** Phosphorus-containing dendrimer according to Claim 1, the said dendrimer being grafted onto a functionalized mineral particle.

5. Phosphorus-containing dendrimer according to Claim 4, in which the functionalized mineral particle is a silica particle having, before the said grafting, one or more groups on its surface that are chosen from $-CO_2H$, dichlorotriazinyl and epoxide groups.

6. Phosphorus-containing dendrimer according to any one of Claims 1 to 5, in which $R^1$ and $R^2$ represent phenyl groups.

7. Phosphorus-containing dendrimer according to any one of Claims 1 to 5, in which $R^1$ and $R^2$ represent an alkoxy group having from 1 to 18 carbon atoms.

8. Method of preparing a phosphorus-containing dendrimer, the said dendrimer comprising a core, at least one generation and an external layer consisting, completely or partly, of identical or different units, the said units satisfying the following formula (I):

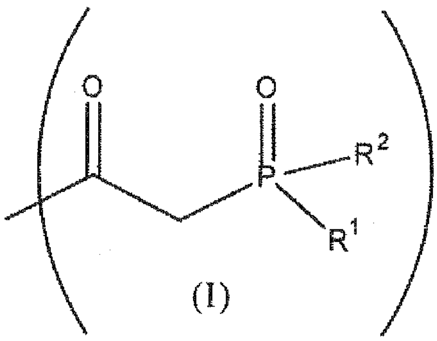

(I)

in which $R^1$ and $R^2$, which may be identical or different, are alkyl, alkoxy or aryl groups,
the said method including a step consisting in making a base dendrimer react with the compound of the following formula (VI):

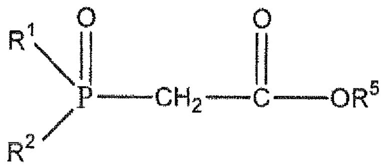

(VI)

in which $R^1$ and $R^2$ are as defined in Claim 1, $R^5$ represents H, a p-nitrophenyl group or a 2,4-dinitrophenyl group, the said base dendrimer including an external layer consisting of units having a terminal functional group capable of reacting with the said compound of formula (VI).

9. Method of preparation according to Claim 8, in which the terminal functional group capable of reacting with the compound of formula (VI) is an $NH_2$ functional group.

10. Method of preparation according to Claim 8 or 9, in which the reaction between the base dendrimer and the compound of formula (VI) is carried out in the presence of a catalyst and optionally of a coupling activator.

11. Method according to Claim 10, in which the catalyst is triethylamine.

12. Method according to Claim 10 or 11, in which the coupling activator is dicyclohexylcarbodiimide.

13. Method according to any one of Claims 8 to 12, in which the reaction between the base dendrimer and the compound

of formula (VI) is carried out on a support which is preferably in the form of silica particles.

**14.** Method for extracting at least one metal chosen from actinides and/or lanthanides present in an aqueous solution, the said method comprising, in succession, a step of bringing the aqueous solution into contact with at least one phosphorus-containing dendrimer having an external layer consisting, completely or partly, of identical or different units, the said units satisfying the following formula (I):

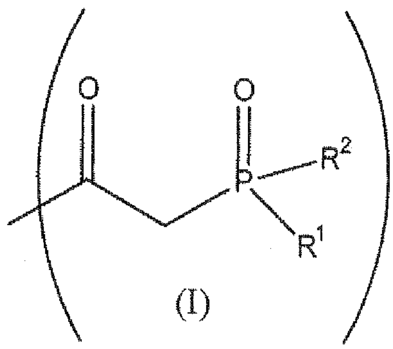

in which $R^1$ and $R^2$, which may be identical or different, are alkyl, alkoxy or aryl groups, followed by a separation step so as to separate the dendrimer or dendrimers that has or have trapped the metal(s) of the aqueous solution.

**15.** Method according to Claim 14, in which the step of bringing the dendrimer into contact with the aqueous solution containing the metal or metals to be extracted is carried out by dissolving the said dendrimer in the said solution.

**16.** Method according to Claim 14 or 15, in which the separation step is carried out by filtering the solution on a filter, the dendrimer having fixed the metal or metals remaining on the filter.

**Patentansprüche**

**1.** Phosphorhaltiges Dendrimer, das umfasst einen Kern, mindestens einen Dendriten (Generation) und eine äußere Schicht, bestehend vollständig oder teilweise aus gleichen oder unterschiedlichen wiederkehrenden Einheiten, die der folgenden Formel (1) entsprechen:

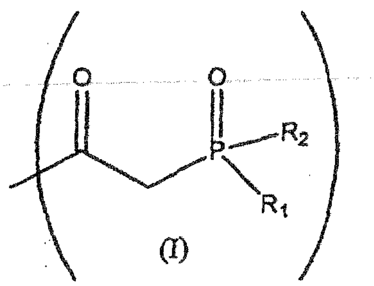

in der die Reste $R_1$ und $R_2$, die gleich oder verschieden sein können, Alkyl-, Alkoxy- oder Arylgruppen darstellen.

**2.** Dendrimer nach Anspruch 1, in dem der Kern besteht aus einer wiederkehrenden Einheit, die einer der folgenden Formeln (II) oder (III) entspricht:

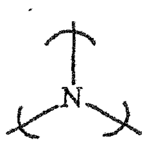

(II)

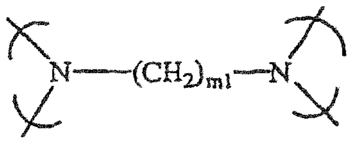

(III)

worin $m_1$ für eine ganze Zahl von 2 bis 4 steht und die n Dendrite (Generationen) umfasst, die bestehen aus wiederkehrenden Einheiten, die gleich oder verschieden sind, wobei n steht für eine ganze Zahl von 1 bis 10, wobei die genannten wiederkehrenden Einheiten der folgenden Formel (IV) entsprechen:

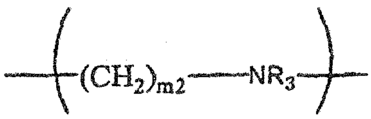

(IV)

worin:

$m_2$ steht für eine ganze Zahl von 1 bis 4;
$R_3$ steht für eine einfache Bindung für die (n - 1) ersten Dendrite (Generationen) und für ein Wasserstoffatom für den n-ten Dendriten (Generation), wenn n größer als 1 ist und
$R_3$ steht für ein Wasserstoffatom, wenn n = 1.

**3.** Dendrimer nach Anspruch 1, in dem der Kern besteht aus einer wiederkehrenden Einheit, die der folgenden Formel (II) entspricht:

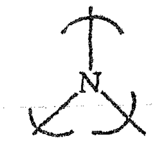

(II)

und n Demndrite (Generationen)) umfasst, die bestehen aus gleichen oder verschiedenen wiederkehrenden Einheiten, die der folgenden Formel (V) entsprechen:

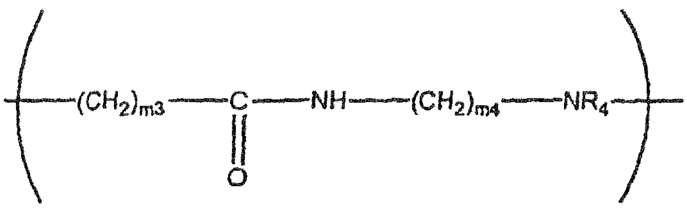

(V)

worin:

- $m_3$ steht für eine ganze Zahl von 2 bis 5;
- $m_4$ steht für eine ganze Zahl von 2 bis 5;

- $R_4$ steht für eine einfache Bindung für die (n-1) ersten Dendrite (Generationen) und für ein Wasserstoffatom für den n-ten Dendriten (Generation), wenn n größer als 1 ist; und
- $R_4$ steht für ein Wasserstoffatom, wenn n = 1.

**4.** Phosphorhaltiges Dendrimer nach Anspruch 1, das auf ein funktionalisiertes mineralisches Teilchen aufgepfropft ist.

**5.** Phosphorhaltiges Dendrimer nach Anspruch 4, in dem das funktionalisierte mineralische Teilchen ein Siliciumdioxid-Teilchen ist, das an seiner Oberfläche vor der Aufpfropfung eine oder mehrere Gruppen aufweist, ausgewählt aus $CO_2H$-, Dichlortriazinyl- und Epoxid-Gruppen.

**6.** Phosphorhaltiges Dendrimer nach einem der Ansprüche 1 bis 5, in dem $R_1$ und $R_2$ die Phenylgruppe darstellen.

**7.** Phosphorhaltiges Dendrimer nach einem der Ansprüche 1 bis 5, in dem $R_1$ und $R_2$ eine Alkoxygruppe mit 1 bis 18 Kohlenstoffatomen darstellen.

**8.** Verfahren zur Herstellung eines phosphorhaltigen Dendrimers, das umfasst einen Kern, mindestens einen Dendriten (eine Generation) und eine äußere Schicht, die vollständig oder teilweise besteht aus gleichen oder unterschiedlichen wiederkehrenden Einheiten, die der folgenden Formel (I) entsprechen:

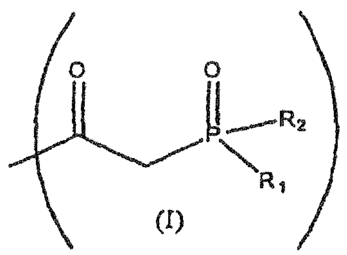

in der $R_1$ und $R_2$, die gleich oder verschieden sein können, Alkyl-, Alkoxy- oder Arylgruppen darstellen,
wobei das genannte Verfahren eine Stufe umfasst, die darin besteht, dass man ein Basis-Dendrimer mit einer Verbindung der folgenden Formel (VI) reagieren lässt

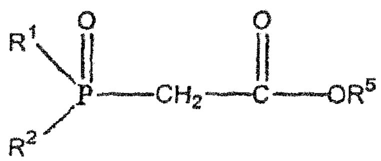

(VI)

in der $R^1$ und $R^2$ die in Anspruch 1 angegebenen Bedeutungen haben, $R^5$ steht für H, eine p-Nitrophenyl- oder eine 2,4-Dinitrophenylgruppe,
wobei das genannte Basis-Dendrimer eine äußere Schicht umfasst, die wiederkehrende Einheiten aufweist, die eine terminale Funktion tragen, die mit der genannten Verbindung der Formel (VI) reagieren kann.

**9.** Verfahren nach Anspruch 8, in dem die terminale Funktion, die mit der Verbindung der Formel (VI) reagieren kann, eine $NH_2$-Funktion ist.

**10.** Verfahren nach Anspruch 8 oder 9, in dem die Reaktion zwischen dem Basis-Dendrimer und der Verbindung der Formel (VI) in Gegenwart eines Katalysators und gegebenenfalls eines Kupplungsaktivators abläuft.

**11.** Verfahren nach Anspruch 10, in dem der Katalysator Triethylamin ist.

**12.** Verfahren nach Anspruch 10 oder 11, in dem der Kupplungsaktivator Dicyclohexylcarbodiimid ist.

**13.** Verfahren nach einem der Ansprüche 8 bis 12, in dem die Reaktion zwischen dem Basis-Dendrimer und der Verbindung der Formel (VI) auf einem Träger abläuft, der vorzugsweise in Form von Siliciumdioxid-Teilchen vorliegt.

**14.** Verfahren zum Extrahieren mindestens eines Metalls, ausgewählt aus den Aktiniden und/oder den Lanthaniden, das in einer wässrigen Lösung vorliegt,
wobei das genannte Verfahren die folgenden aufeinanderfolgenden Stufen umfasst: eine Stufe, in der die wässrige Lösung mit mindestens einem phosphorhaltigen Dendrimer in Kontakt gebracht wird, das eine äußere Schicht aufweist, die vollständig oder teilweise besteht aus gleichen oder verschiedenen wiederkehrenden Einheiten, die der folgenden Formel (I) entsprechen:

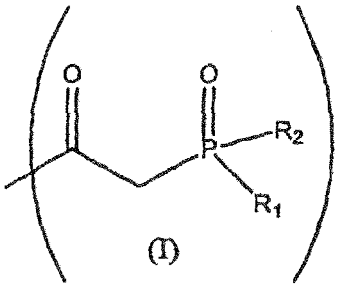

(I)

in der $R_1$ und $R_2$, die gleich oder verschieden sein können, Alkyl-, Alkoxy- oder Arylgruppen darstellen,
gefolgt von einer Abtrennungsstufe, in der das Dendrimer oder die Dendrimeren, auf denen das Metall oder die Metalle abgelagert ist (sind), von der wässrigen Lösung abgetrennt wird (werden).

**15.** Verfahren nach Anspruch 14, in dem das Inkontaktbringen des Dendrimers mit der wässrigen Lösung, die das oder die zu extrahierenden Metalle enthält, durchgeführt wird durch Auflösung des genannten Dendrimers in der genannten Lösung.

**16.** Verfahren nach Anspruch 14 oder 15, in dem die Stufe der Abtrennung durchgeführt wird durch Filtrieren der Lösung über einen Filter, wobei das Dendrimer, an dem das oder die Metalle fixiert ist (sind), auf dem Filter zurückbleibt.

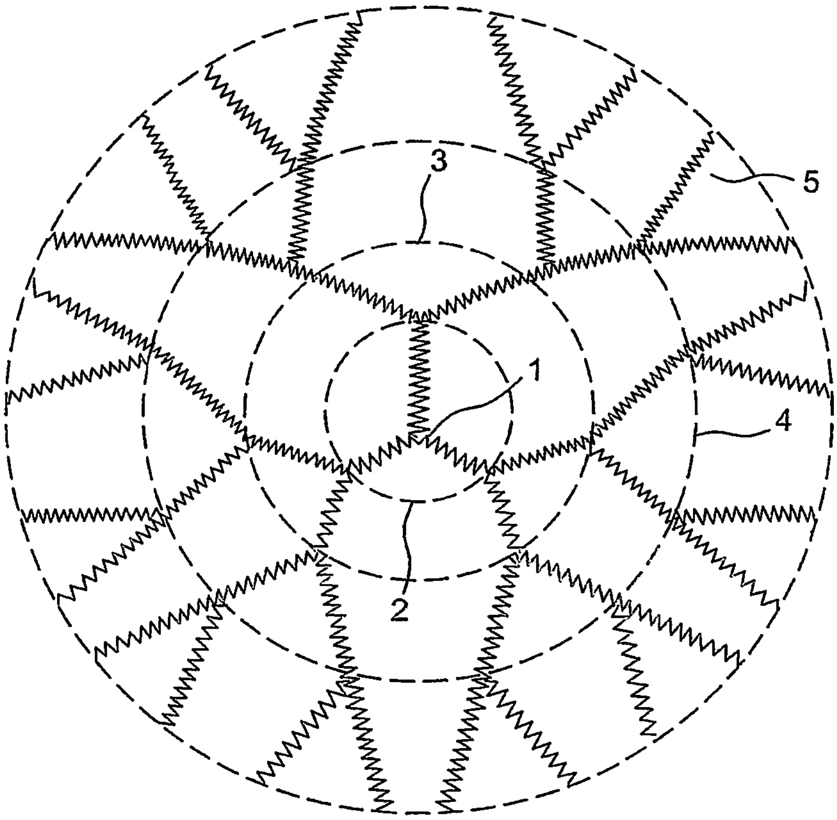


FIG. 1

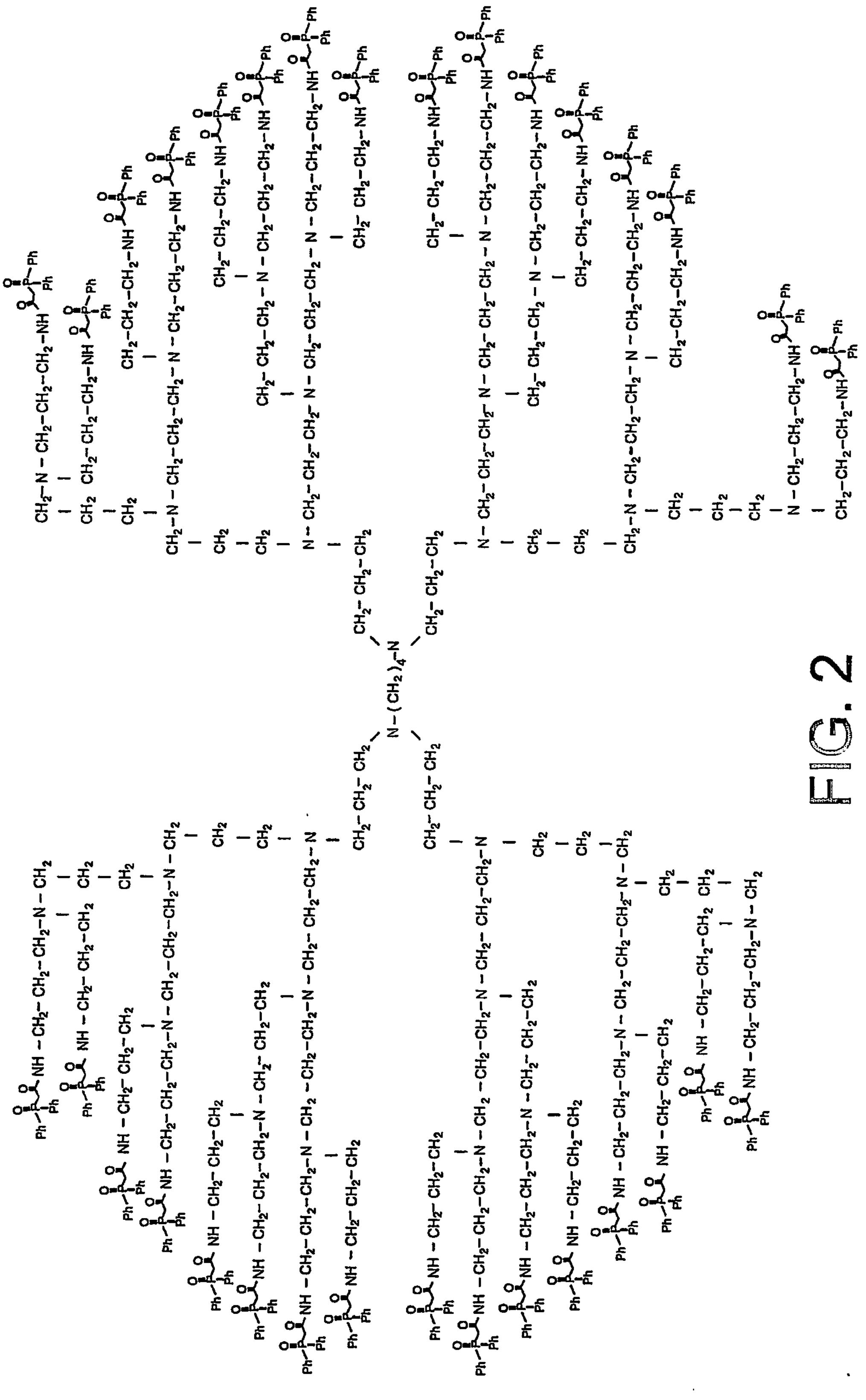

FIG. 2

FIG. 3

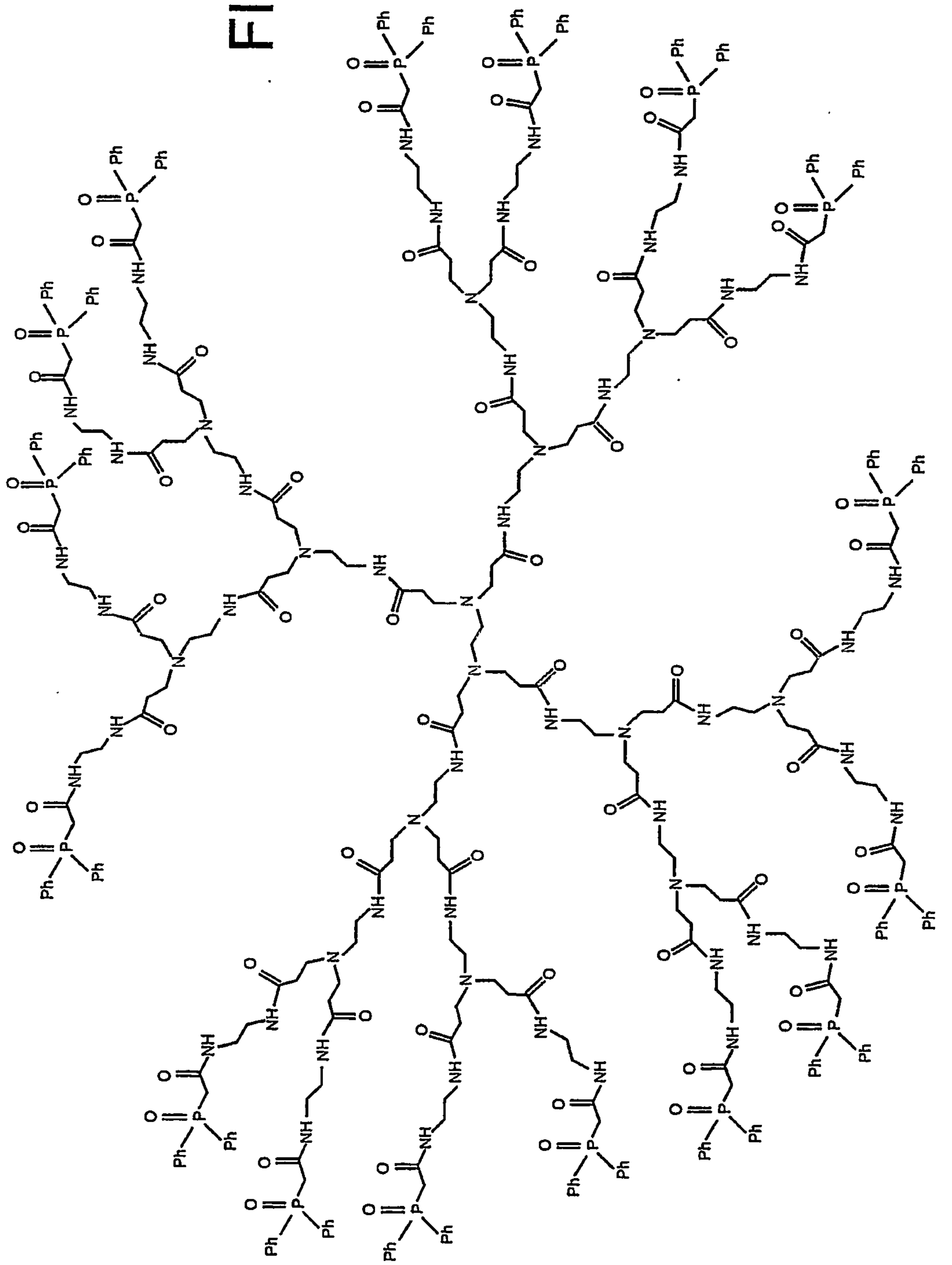

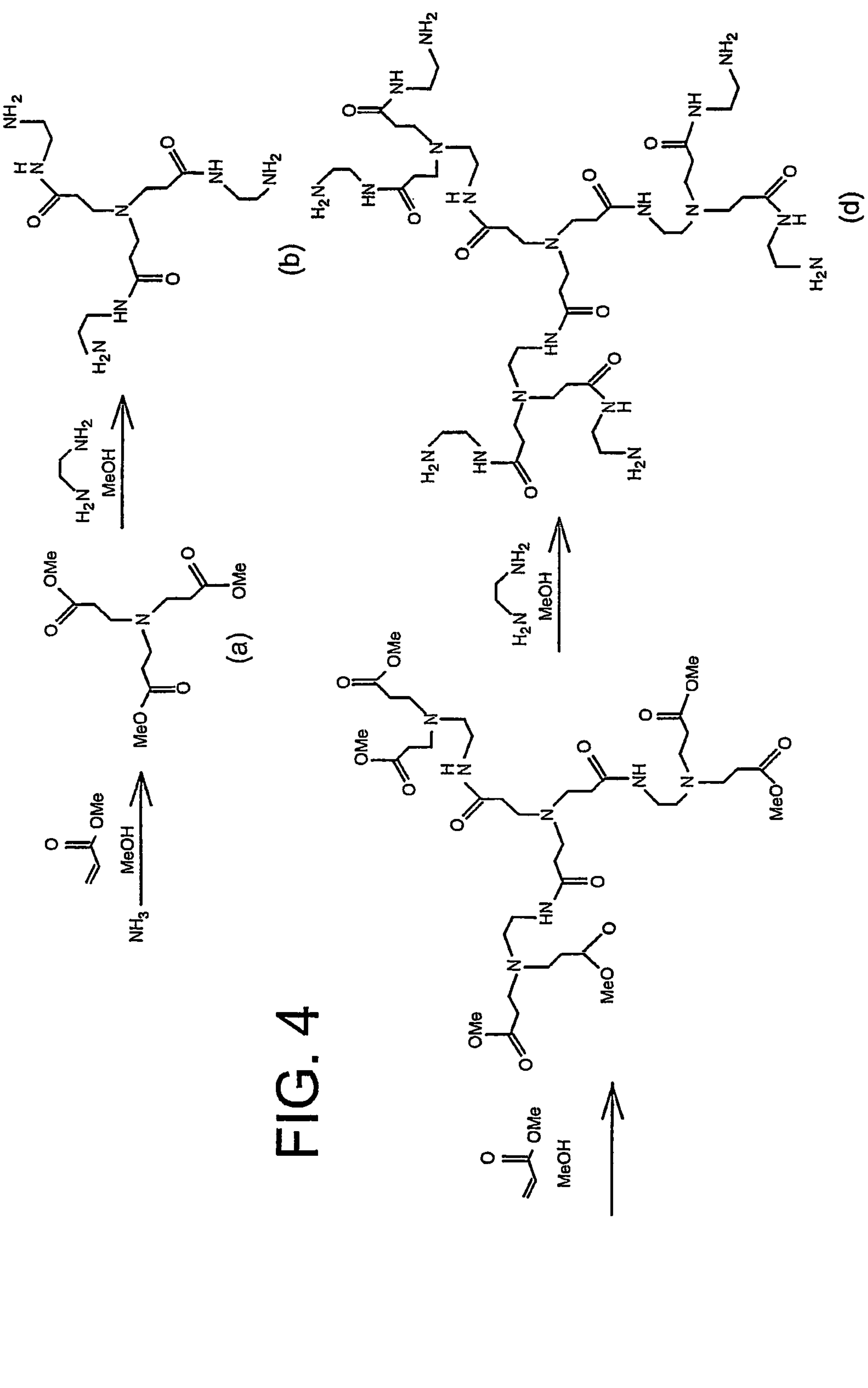


(a)

(b)

(d)

FIG. 4

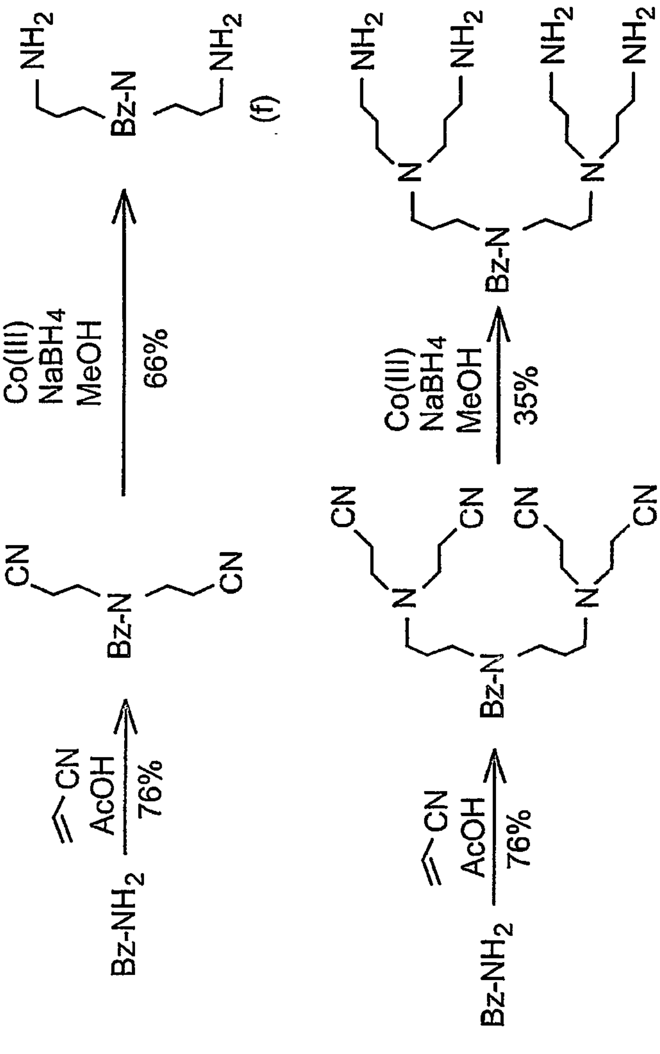


FIG. 5